# EUROPEAN PATENT APPLICATION

(11) **EP 4 726 844 A1**
(43) Date of publication of application: **15.04.2026**
(21) Application number: 25794951.1
(22) Date of filing: 31.03.2025
(51) Int. Cl.: H01M 10/0585, H01M 10/0565, H01M 4/66, H01M 10/42, H01M 4/62, H01M 4/70, H01M 10/052, H01M 4/02

(54) **BIPOLAR UNIT CELL, MANUFACTURING METHOD THEREFOR, AND BIPOLAR BATTERY COMPRISING SAME**

(30) Priority: 22.04.2024 KR 20240053382; 28.03.2025 KR 20250040685
(71) Applicant: LG Energy Solution, Ltd., Seoul 07335 (KR)
(72) Inventor: LIM, Taeseob, Daejeon 34122 (KR); RYU, Jihoon, Daejeon 34122 (KR); KIM, Dong Kyu, Daejeon 34122 (KR); JUN, Youngjin, Daejeon 34122 (KR); KANG, Yonghee, Daejeon 34122 (KR); BYUN, Seoungwoo, Daejeon 34122 (KR); JANG, Eunji, Daejeon 34122 (KR)
(74) Representative: BCKIP Part mbB
(86) International application number: PCT/KR2025/004174
(87) International publication number: WO 2025/225906

(57) **Abstract**

According to an embodiment of the present disclosure, provided is a bipolar unit cell comprising: a positive electrode including a positive electrode current collector, and a positive electrode material layer formed on one surface of the positive electrode current collector so that a positive electrode non-coated portion is formed at the edge, a negative electrode including a negative electrode current collector, and a negative electrode material layer formed on one surface of the negative electrode current collector so that a negative electrode non-coated portion is formed at the edge, and a separator,
wherein the positive electrode material layer and the negative electrode material layer are stacked so as to face each other while interposing a separator between them, and wherein a cured gel electrolyte is contained in at least one selected from the group consisting of the positive electrode material layer, the negative electrode material layer, and the separator, a manufacturing method thereof, and a bipolar battery having a structure in which two or more of the bipolar unit cells are stacked,

## Description

### [TECHNICAL FIELD]

### Cross-Reference to Related Application(s)

This application claims priority to and the benefit of Korean Patent Application no. KR10-2024-0053382, filed on April 22, 2024, and Korean Patent Application no. KR10-2025-0040685, filed on March 28, 2025, the entire contents of which are incorporated herein by reference.

The present disclosure relates to a bipolar unit cell, a manufacturing method thereof, and a bipolar battery comprising the same.

### [BACKGROUND ART]

Recently, there has been a rising demand for high-capacity, high-output, and high-stability secondary batteries as an application area of lithium secondary batteries has rapidly expanded to power storage supply of large-area devices, such as automobiles and power storage devices, as well as power supply of electronic devices such as electrical, electronic, communication, and computer devices.

Electrodes used in such secondary batteries can be classified into monopolar electrodes in which active materials having the same polarity are coated on both surfaces of the current collector, and bipolar electrodes in which active materials having different polarities are coated on both surfaces of the current collector.

Secondary batteries using a monopolar electrode have a connection portion for connecting electrodes, so that the output may be reduced due to the electrical resistance of the connection portion. Also, the temperature rise due to Joule heating may lead to various problems in terms of cell safety, and the battery components for heat dissipation structure, heat monitoring, and wiring occupy a lot of space in the battery pack, resulting in poor space efficiency. On the other hand, secondary batteries using bipolar electrodes are used by stacking electrodes without such a connection portion, so the connection resistance of the electrodes can be minimized, resulting in excellent output performance, and the structure and components are simplified, resulting in good space efficiency. Therefore, the energy density and output density per volume can be significantly improved compared to conventional lithium ion batteries.

Despite these advantages, secondary batteries of bipolar electrodes have difficulty in increasing their capacity. Conventionally, bipolar electrodes were mainly formed by coating a positive electrode active material and a negative electrode active material on both surfaces of the current collector, with a stainless steel current collector interposed between them, and the electrolyte solution was formed in a structure isolated on both sides of the current collector as a center.

However, when stainless steel foil is repeatedly used as the current collector, there is a durability problem, and a positive electrode active material and a negative electrode active material containing different materials from each other are formed on both surfaces of the current collector. Therefore, despite that the flexibility thereof is different and the required conditions or the like are different, not only there is a limitation in regulating them, but also there is a problem that electrode contamination may occur when stored in the form of roll electrodes.

Additionally, in the case of bipolar batteries using a bipolar electrode, it is very important to prevent leakage of the electrolyte solution impregnated into them, In general, a gasket is for sealing a bipolar battery, but it is difficult to manufacture the gasket in a thickness of less than 1 mm. If the thickness of the gasket is too large, there is a problem that the empty space increases between the bipolar electrodes, and thus the ratio of the output to volume drops.

Therefore, there is a need to develop a bipolar battery that can ensure the safety in battery and improve its performance while solving the above problems.

### [DETAILED DESCRIPTION OF THE INVENTION]

### [Technical Problem]

It is an object of the present disclosure to provide a bipolar unit cell and a bipolar battery that can solve the above problems of bipolar batteries, and solve the problem of electrolyte leakage while realizing a bipolar battery with a simpler process.

In particular, it is an object of the present disclosure to provide a unit cell and a bipolar battery that can effectively solve the problem of electrolyte leakage even without forming a sealing member.

### [Technical Solution]

According to an aspect of the present disclosure, there is provided a bipolar unit cell comprising:
a positive electrode including a positive electrode current collector, and a positive electrode material layer formed on one surface of the positive electrode current collector so that a positive electrode non-coated portion is formed at the edge,
a negative electrode including a negative electrode current collector, and a negative electrode material layer formed on one surface of the negative electrode current collector so that a negative electrode non-coated portion is formed at the edge, and
a separator,
wherein the positive electrode material layer and the negative electrode material layer are stacked so as to face each other while interposing a separator between them, and
wherein a cured gel electrolyte is contained in at least one selected from the group consisting of the positive electrode material layer, the negative electrode material layer, and the separator.

The positive electrode, the negative electrode, and the separator may be adhered to one another by the cured gel electrolyte.

A positive electrode insulating layer may be formed on the positive electrode non-coated portion, and a negative electrode insulating layer may be formed on the negative electrode non-coated portion. Also, a conductive layer may be formed on at least one of the other surface of the positive electrode current collector and the other surface of the negative electrode current collector.

The conductive layer may be formed with an area of 90% to 100% relative to the exposed area of the other surface of the positive electrode current collector or the other surface of the negative electrode current collector.

Such a conductive layer may be a conductive tape containing copper or carbon or a conductive sealant.

The bipolar unit cell may further comprise a sealing member that seals an opening between the positive electrode current collector and the negative electrode current collector, wherein the sealing member may be a polymer film formed on the inside of the opening between the positive electrode current collector and the negative electrode current collector, or having a form that connects the other surface of the positive electrode current collector and the other surface of the negative electrode current collector.

The positive electrode material layer may be a dry positive electrode.

The positive electrode current collector may be an Al current collector, and the negative electrode current collector may be a Cu current collector.

According to another aspect of the present disclosure, there is provided a manufacturing method of a bipolar unit cell, the method comprising the steps of:
(a) forming a positive electrode material layer on one surface of a positive electrode current collector so that a positive electrode non-coated portion is formed at the edge, and forming a negative electrode material layer on one surface of a negative electrode current collector so that a negative electrode non-coated portion is formed at the edge, thereby preparing a positive electrode and a negative electrode, and preparing a separator,
(b) impregnating a gel electrolyte composition into at least one selected from the group consisting of the positive electrode material layer, the negative electrode material layer, and the separator, and
(c) stacking the positive electrode and the negative electrode with the separator interposed between them in a state in which the positive electrode material layer and the negative electrode material layer face each other, and then curing the gel electrolyte composition.

The positive electrode, the negative electrode, and the separator may be adhered to one another and integrated by the curing of the gel electrolyte composition.

Further, in step (b), when impregnating the gel electrolyte composition into the positive electrode material layer or the negative electrode material layer, the impregnation may be performed in a state where a masking tape is attached to at least one of the positive electrode non-coated portion and the negative electrode non-coated portion.

Furthermore, the manufacturing method of a bipolar unit cell may further comprise forming a positive electrode insulating layer on the positive electrode non-coated portion, and forming a negative electrode insulating layer on the negative electrode non-coated portion. In addition, the manufacturing method of a bipolar unit cell may further comprise forming a conductive layer on at least one of the other surface of the positive electrode current collector and the other surface of the negative electrode current collector.

After step (c), the manufacturing method may further comprise sealing the opening between the positive electrode current collector and the negative electrode current collector with a sealing member.

The positive electrode material layer may be formed by dry-mixing a positive electrode active material, a conductive material, and a binder containing a fiberized polymer, forming the mixture into a free-standing film, and then attaching the film to one surface of the positive electrode current collector.

According to yet another aspect of the present disclosure, there is provided a bipolar battery having a structure in which two or more of the bipolar unit cells are stacked, wherein the bipolar unit cells are stacked so that current collectors having different polarities face each other.

In this case, a conductive layer may be located between the two or more bipolar unit cells, and the bipolar unit cells may be adhered to each other by the conductive layer.

In the bipolar unit cells located at the outermost part among the bipolar unit cells, the outermost electrodes may be formed with electrode terminals, respectively.

### [BRIEF DESCRIPTION OF THE DRAWINGS]

FIG. 1 shows a cross-sectional schematic diagram of a bipolar unit cell according to an embodiment of the present disclosure.
FIG. 2 shows a cross-sectional schematic diagram of a bipolar unit cell according to another embodiment of the present disclosure.
FIG. 3 shows a schematic diagram of a negative electrode material forming surface of a negative electrode in the bipolar unit cell of FIG. 2.
FIG. 4 shows a cross-sectional schematic diagram of a bipolar unit cell according to another embodiment of the present disclosure.
FIG. 5 shows a cross-sectional schematic diagram of a bipolar unit cell according to another embodiment of the present disclosure.
FIG. 6 shows a schematic diagram of a manufacturing method of the bipolar unit cell of FIG. 1.
FIG. 7 shows a cross-sectional schematic diagram of a bipolar battery according to an embodiment of the present disclosure.
FIG. 8 shows a cross-sectional schematic diagram of a bipolar battery according to another embodiment of the present disclosure.
FIG. 9 shows a formation graph of Example 1 according to Experimental Example 1.
FIG. 10 shows a charge/discharge graph of Example 1 according to Experimental Example 1.
FIG. 11 shows a comparison graph of charge/discharge of Example 1 and Comparative Example 1 according to Experimental Example 2.

### [DETAILED DESCRIPTION OF THE EMBODIMENTS]

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Throughout the descriptions herein, when a certain part "includes" a component, this does not indicate that the certain part excludes other components, but indicates that the part may further include other components, unless otherwise defined.

Throughout the descriptions herein, the "average particle size D50" means a particle size at which cumulative volumes of powder particles (e.g., positive electrode active material, negative electrode active material, etc.) reach 50% in the particle size distribution curve of the particles. The average particle size D50 can be measured using a laser diffraction method. For example, the D50 can be measured by a process which includes dispersing the powder of particles to be measured in a dispersion medium, introducing it into a commercially available laser diffraction particle size measurement device (e.g., Microtrac MT 3000), irradiating it with ultrasound of about 28 kHz with the output power of 60W to obtain a volume cumulative particle size distribution graph, and then determining the particle size corresponding to 50% of cumulative volume.

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein. In the specification and drawings, the same or similar components throughout the description will be denoted with the same reference numerals.

### Bipolar unit cell and manufacturing method thereof

According to an embodiment of the present disclosure, a bipolar unit cell is provided.

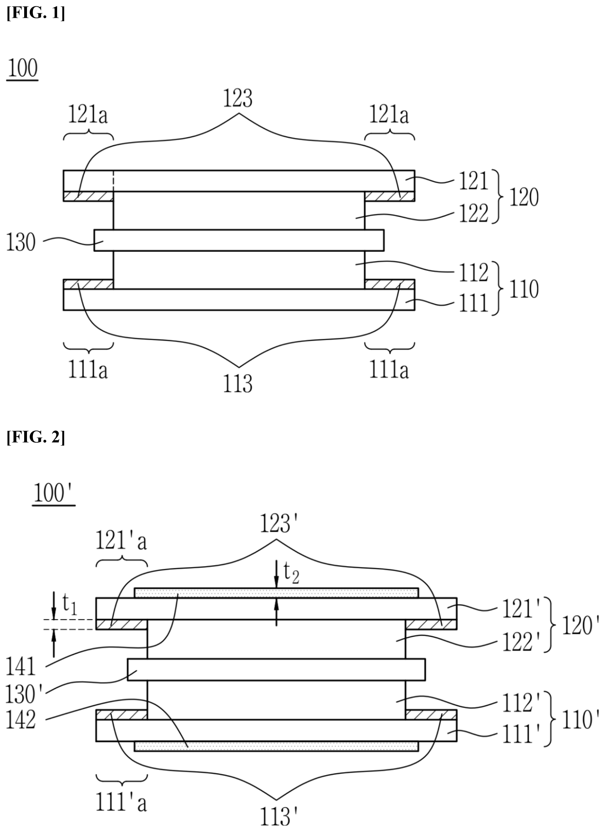

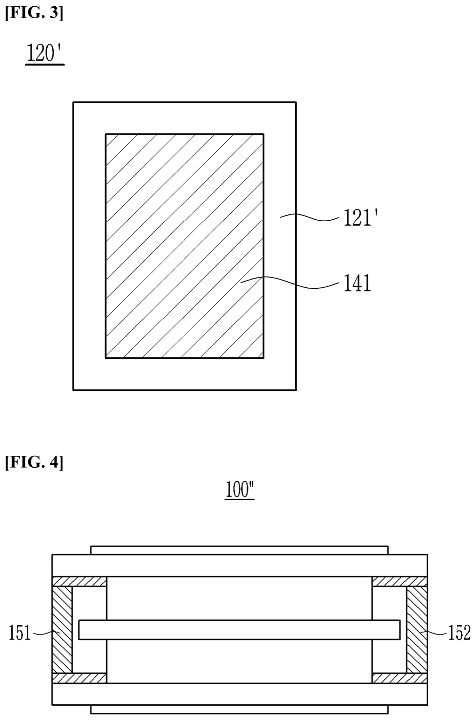

FIG. 1 shows a cross-sectional schematic diagram of a bipolar unit cell 100 according to an embodiment of the present disclosure, FIG. 2 shows a cross-sectional schematic diagram of a bipolar unit cell 100 according to another embodiment of the present disclosure, and FIG. 3 shows a top view of the negative electrode side of FIG. 2.

Referring to FIG. 1, a bipolar unit cell 100 consists of a structure which comprises: a positive electrode 110 including a positive electrode current collector 111, and a positive electrode material layer 112 formed on one surface of the positive electrode current collector 111 so that a positive electrode non-coated portion 111a is formed at the edge, a negative electrode 120 including a negative electrode current collector 121, and a negative electrode material layer 122 formed on one surface of the negative electrode current collector 121 so that a negative electrode non-coated portion 121a is formed at the edge, and a separator 130, wherein the positive electrode material layer 112 and the negative electrode material layer 122 are stacked so as to face each other while interposing a separator 130 between them.

In this case, a cured gel electrolyte (not shown) is contained in at least one selected from the group consisting of the positive electrode material layer 112, the negative electrode material layer 122, and the separator 130. Specifically, as a form in which sufficient electrolyte impregnation is achieved, a cured gel electrolyte (not shown) may be contained in all of the positive electrode material layer 112, the negative electrode material layer 122, and the separator 130.

This bipolar unit cell 100 is manufactured by impregnating a gel electrolyte composition into at least one selected from the group consisting of a positive electrode material layer 112, a negative electrode material layer 122, and a separator 130, particularly, all of them, and then stacking the positive electrode 110 and the negative electrode 120 so that a separator 130 is interposed between them, and then curing the gel electrolyte composition. Therefore, after manufacturing, the curing is performed in a form that connects the positive electrode 110, the negative electrode 120, and the separator 130, so that they are adhered to each other by the cured gel electrolyte. If all of them are impregnated with the gel electrolyte composition from the beginning, the entire impregnation can be achieved even without leakage of electrolyte solution, which is more preferable.

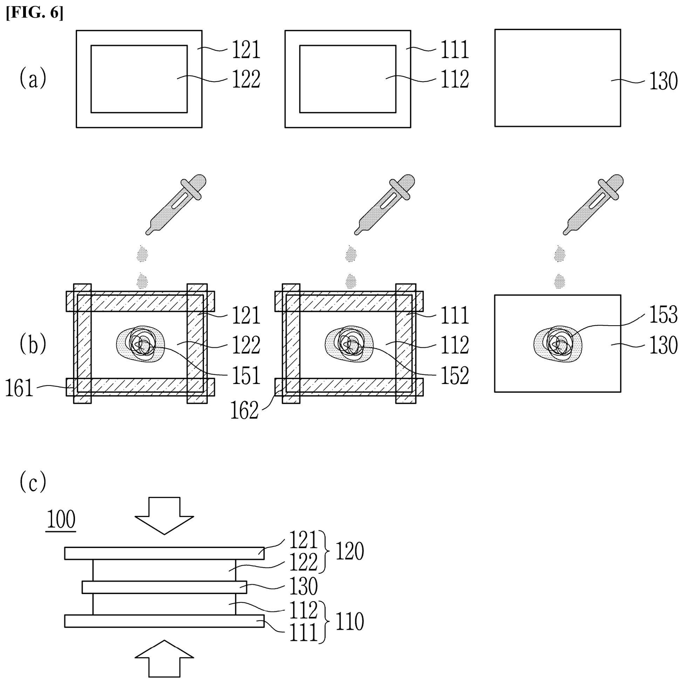

To more specifically explain this structure, FIG. 6 shows a schematic diagram of a manufacturing method of the bipolar unit cell 100 according to the present disclosure.

Referring to FIG. 6 together with FIG. 1, a positive electrode material layer 112 is formed on one surface of a positive electrode current collector 111 so that a positive electrode non-coated portion is formed at the edge, and a negative electrode material layer 122 is formed on one surface of a negative electrode current collector 121 so that a negative electrode non-coated portion is formed at the edge, thereby preparing a positive electrode 110 and a negative electrode 120, and preparing a separator 130 (step a).

Then, a gel electrolyte composition 153 is impregnated into at least one selected from the group consisting of the positive electrode material layer 112, the negative electrode material layer 122, and the separator 130 (step b).

In this case, the impregnation may be performed by dropping the gel electrolyte composition 153 by a device such as a dropping pipette as shown in FIG. 6, but it may also be performed by immersing the positive electrode 110, the negative electrode 120, or the separator 130 in a water bath containing the gel electrolyte composition 153.

However, in the latter method, when impregnating the positive electrode material layer 112 or the negative electrode material layer 122, a large amount of gel electrolyte composition 153 may remain even on the positive electrode current collector and the negative electrode current collector, which may affect the contact property or volume, so a method as shown in FIG. 6 may be preferred.

Meanwhile, in the case of the impregnation method using a device such as a dropping pipette as shown in FIG. 6, although not limited thereto, the gel electrolyte compositions 151, 152 may be impregnated while masking tapes 162, 161 are attached to the positive electrode non-coated portion 111a and the negative electrode non-coated portion 121a, respectively, so that the non-coated portions 111a, 121a of the positive electrode 110 and the negative electrode 120 are not contaminated by the gel electrolyte compositions 151, 152.

Further, although a shape in which the gel electrolyte compositions 151, 152, 153 are partially dropped is shown in the figure, they are wholly impregnated into the positive electrode material layer 112, the negative electrode material layer 122, and the separator 130 except for the location where the masking tape is attached.

When the gel electrolyte composition 153 is impregnated into the separator 130, there is no non-coated portion, and a masking tape may not be attached in order to wholly impregnate into the separator 130. However, thereafter, in order to protect from leakage of some of the gel electrolyte liquid contained in the separator 130, before impregnating the gel electrolyte composition even into the separator 130, a masking tape is attached to an edge portion excluding the size corresponding to the positive electrode 110 and the negative electrode 120 in one surface of the separator 130.

The masking tapes 161, 162 may be removed after impregnation of the electrolyte composition.

Subsequently, the positive electrode 110 and the negative electrode 120 are stacked by interposing the separator 130 between them in a state in which the positive electrode material layer 112 and the negative electrode material layer 122 face each other, and then the gel electrolyte compositions 151, 152, 153 are cured to prepare a bipolar unit cell 100 (step c). At this time, the positive electrode 110, the negative electrode 120, and the separator 130 are adhered to one another and integrated by the curing of the gel electrolyte composition.

At this time, the curing of the gel electrolyte composition may be performed simultaneously with the pressurization in order to ensure sufficient impregnation of the gel electrolyte compositions 151, 152, 153 and strong bonding between the positive electrode 110, the negative electrode 120, and the separator 130, and may be performed using heat or light. In the case of the heat curing, it can be performed at 50 to 90 degrees Celsius for 30 minutes to 24 hours. The light curing can be performed by irradiating UV for 30 seconds to 30 minutes.

Therefore, according to the present disclosure, since the gel electrolyte performs the role of bonding the components, there is no need to add a separate adhesive material or perform a lamination process.

In addition, in this case, the bipolar unit cell is manufactured in a state where the gel electrolyte is contained first, and does not have fluidity after being cured with the gel electrolyte. Therefore, there is no problem of electrolyte leakage from respective unit cells, and thus driving can be made as a bipolar battery even without a sealing member as shown in FIG. 1, and safety problems due to electrolyte leakage can be eliminated.

Referring again to FIG. 1, the bipolar unit cell 100 is manufactured into a bipolar battery by stacking bipolar unit cells, and insulating layers 113, 123 may be formed on the non-coated portions to prevent short circuits that may occur between the unit cells when they are driven.

Specifically, the positive electrode insulating layer 113 is formed on the positive electrode non-coated portion 111a, and the negative electrode insulating layer 123 is formed on the negative electrode non-coated portion 121a.

Here, the positive electrode insulating layer 113 and the negative electrode insulating layer 123 may be formed on the non-coated portion of the surface where the positive electrode material layer 112 and the negative electrode material layer 122 are formed.

Such insulating layers 113, 123 may be formed using insulating coating layers, insulating tapes, etc. made of various materials that have been used in conventional secondary batteries, and are not limited thereto. For example, the insulating coating layer or insulating tape can be composed of a polymer, or can contain polymer and inorganic particles.

Therefore, short circuits between unit cells can be prevented by such insulating layers 113, 123. The thickness t₁ of the insulating layers 113, 123 may be 1 to 100 µm, particularly, 1 to 20 µm.

If the insulating layer is formed too thinly outside the above range, there is a difficulty in the process, and if the insulating layer is formed too thickly, it will reduce the efficiency of the manufacturing process, which is not preferable.

The process of forming such insulating layers 113, 123 is not separately shown in FIG. 6, but the insulating layers 113, 123 may be formed after step (c) in FIG. 6. The insulating layers may be formed by a simple attachment method if it is a tape, and may be formed by a conventionally known method such as a coating or drying step if it is a coating layer. The method thereof is not limited thereto.

Here, the positive electrode current collector 111 is not particularly limited so long as it has high conductivity without causing a chemical change in the corresponding battery. For example, the current collector used herein may include stainless steel, aluminum, nickel, titanium, baked carbon, or a material formed by surface-treating a surface of aluminum or stainless steel with carbon, nickel, titanium, silver, or the like, but specifically, it may be an Al current collector. Here, the Al current collector may be made of Al, wherein it is a concept of further including other metal materials to the extent of impurity content.

The positive electrode current collector 111 may have a thickness of 3 µm to 500 µm, and fine protrusions and depressions may be formed on the surface of the positive electrode current collector, thereby reinforcing the binding strength of the positive electrode material layer. For example, the positive electrode current collector may be used in various forms such as a film, a sheet, a foil, a net, a porous body, a foam body, a nonwoven fabric, etc.

The positive electrode material layer 121 may include a positive electrode active material, a binder, and further a conductive material.

The positive electrode active material is a compound a compound capable of reversible intercalation and deintercalation of lithium, and various combinations are possible. Examples thereof may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where, 0 < Z < 2), etc.), lithium-nickel-cobalt-based oxide (e.g., LiNi_{1-Y1}Co_{Y1}O₂ (where, 0<Y1<1), etc.), lithium-manganese-cobalt-based oxide (e.g., LiCo_{1-Y2}Mn_{Y2}O₂ (where, 0<Y2<1), LiMn_{2-Z1}Co_{Z1}O₄ (where, 0 < Z1 < 2), etc.), lithium-nickel-manganese-cobalt-based oxide (e.g., Li(NiₚCo_{q}Mnᵣ)O₂ (where, 0 < p < 1, 0 < q < 1, 0 < r < 1, p+q+r=1) or Li(Niₚ₁Co_{q1}Mnᵣ₁)O₄ (where, 0 < p1 < 2, 0 < q1 < 2, 0 < r1 < 2, p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2 and s2 are atomic fractions of each independent elements, wherein 0 < p2 < 1, 0 < q2 < 1, 0 < r2 < 1, 0 < s2 < 1, p2+q2+r2+s2=1), etc.), lithium iron phosphate (e.g., Li₁₊ₐ₁Fe₁₋ₓ₁Mₓ₁(PO_{4-b1})X_{b1} (where M is at least one selected from Al, Mg and Ti, X is at least one selected from F, S and N, and - 0.5≤a1≤0.5, 0≤x1≤0.5, 0≤b1≤0.1), and any one thereof or a compound of two or more thereof may be included. Specifically, the positive electrode active material may include a lithium transition metal oxide represented by the following Formula 1, and particularly 0.5≤x≤0.7, 0≤b≤0.1, and more particularly, M may be Co and Mn, or may be Co, Mn, and Al.

[Formula 1] Li₁₊ₐNiₓM₁₋ₓO_{2-b}X_{b}

wherein, in Formula 1, M is at least one element selected from the group consisting of Mn, Co, Al, Fe, V, Cr, Ti, Ta, Mg, and Mo, X is at least one element selected from F, S, and N, and 0≤a≤0.5, 0.3≤x<0.8, 0≤b≤0.1.

Alternatively, specifically, it may be lithium iron phosphate.

The binder is a component that assists in the binding between the conductive material, the positive electrode active material, and the positive electrode current collector. Examples of such a binder include polyvinylidene fluoride (PVDF), polyvinyl alcohol, carboxymethyl cellulose (CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrene-butadiene rubber, fluororubber, various copolymers thereof, and the like.

Typically, the binder may be included in an amount of 0.5 to 20 wt.%, particularly 0.5 to 10 wt.%, and more particularly 0.5 to 5 wt.%, based on the total weight of the positive electrode material layer 112.

The conductive material is a component for further improving the conductivity of the positive electrode active material. Such a conductive material is not particularly limited as long as it has conductivity without causing any chemical change in the corresponding battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be included in an amount of 0.1 to 20 wt.%, particularly 0.5 to 10 wt.%, and more particularly 0.5 to 5 wt.%, based on the total weight of the positive electrode material layer 112.

In addition, other additives may further include, for example, a filler or the like as a component for inhibiting the expansion. The filler is not particularly limited as long as it can inhibit the expansion of the electrode without causing any chemical change in the corresponding battery, and examples thereof may include olefinic polymers such as polyethylene and polypropylene; fibrous materials such as glass fibers and carbon fibers, and the like.

Meanwhile, the positive electrode 110 may be a wet positive electrode manufactured by mixing the positive electrode active material, conductive material, and binder as described above in the presence of a solvent to prepare a slurry, and then coating, drying, and rolling the slurry, or may be a dry positive electrode manufactured in the absence of a solvent.

When the positive electrode 110 is a dry positive electrode, the positive electrode material layer 112 can be manufactured as a dry free-standing film. Specifically, it can be manufactured by dry mixing a binder including a fiberized polymer together with the positive electrode active material and the conductive material as described above, and molding the mixture into a free-standing film form.

Here, the fiberized binder may be polytetrafluoroethylene (PTFE). Since this fiberized binder is fiberized by shearing, a dry free-standing film can be manufactured by mixing the positive electrode active material, the conductive material, and the binder even without a separate solvent and shearing the mixture.

In this case, the fiberized binder may be included in an amount of 50 wt.% or more, or 100 wt.%, based on the total weight of the binder.

After being formed into a dry free-standing film in this manner, the film may be attached to one surface of the positive electrode current collector to manufacture the positive electrode 110.

When the positive electrode 110 is manufactured by a dry process compared to a wet process, the uniformity of electrode loading is improved, adhesion strength is increased, and edges and drag lines that appear during the wet manufacturing process are mitigated, thereby improving electrode quality. In addition, since high loading electrode can be realized, a dry positive electrode may be used more preferably.

The negative electrode current collector 121 is not particularly limited so long as the negative electrode current collector has high conductivity without causing a chemical change in the battery. For example, copper, stainless steel, nickel, titanium, baked carbon, or a material formed by surface-treating a surface of copper or stainless steel with carbon, nickel, titanium, silver, or the like, or aluminum-cadmium alloys, or the like may be used. Specifically, it may be a Cu current collector, wherein the Cu current collector may be made of Cu, which is a concept of further including other metal materials at approximately impurity content level.

The negative electrode current collector 121 may generally have a thickness of 3 µm to 500 µm. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foam, and a non-woven fabric structure.

The negative electrode material layer 122 may include a negative electrode active material, a binder, a conductive material, and other additives as described above.

The negative electrode active material may include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; metals such as Al, Cu, Ge, Si, Sn, etc.; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The negative electrode 120 may also be a wet negative electrode manufactured by mixing the negative electrode active material, conductive material, and binder as described above in the presence of a solvent to prepare a slurry, and then coating, drying, and rolling the slurry, or may be a dry negative electrode manufactured in the absence of a solvent, without being limited thereto. The dry negative electrode may also be manufactured using a binder containing a fiberized polymer, and the method therefor is similar to that described for the dry positive electrode.

The separator 130 can be used without particular limitation as long as it is typically used as a separator in a secondary battery, and particularly, a separator having excellent moisture-retention ability for an electrolyte as well as low resistance to the movement of electrolyte ions may be preferably used.

For example, the separator 130 used herein may include a porous polymer film including a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof. Also, a typical porous nonwoven fabric, for example, a nonwoven fabric formed of high melting point glass fibers or polyethylene terephthalate fibers may be used as the separator.

Alternatively, the separator may be a safety reinforced separator (SRS) in which a coating layer containing binding materials and inorganic particles is formed on one surface or both surfaces of the polymer substrate as described above. The polyolefin substrate of the SRS used herein may be the separator materials described above, and the coating layer includes an inorganic particle and a binding material.

Here, the inorganic particle makes it possible to form an empty space between inorganic particles, and plays a role to form a fine porosity and also serves as a spacer capable of maintaining a physical form. Further, the inorganic particle has a feature of not having a physical property changed even at a high temperature of 200°C or higher, and thus the organic-inorganic mixed layer formed comes to have an excellent thermal resistance.

The inorganic particles are not particularly limited, as long as they are electrochemically stable. In other words, the inorganic particles which may be used in the present disclosure are not particularly limited, unless they cause an oxidation and/or reduction reaction in a working voltage range of a battery to be applied. In particular, in case of using an inorganic particle having an ion transfer capacity, an ionic conductance in electrochemical elements may be increased to improve a performance, and thus the one having a high ion conductance is preferable. Further, if the inorganic particle has a high density, it is difficult to disperse such particles during manufacturing and there is a problem of increasing a weight when manufacturing a battery. Thus, the one having a small density is preferable, if possible. In addition, an inorganic material having a high dielectric constant contributes to an increase in a degree of dissociation of electrolytic salt in liquid electrolyte, e.g., lithium salt, thereby improving the ion conductivity of the electrolyte. Finally, inorganic particles having thermal conductivity are more preferable because they have excellent heat absorbing ability and therefore inhibit the phenomenon in which heat is concentrated locally to form a heat generation point, leading to thermal runaway.

For the reasons mentioned above, the inorganic particle is preferably one or more selected from the group consisting of (a) a high-dielectric constant inorganic particle having a dielectric constant of 1 or more, 5 or more, preferably 10 or more, (b) an inorganic particle having piezoelectricity, (c) a thermal conductive inorganic particle, and (d) an inorganic particle having a lithium ion transfer ability.

The inorganic particle having piezoelectricity means a material which is a non-conductor at atmospheric pressure, but which has an electrified property due to a change in an internal structure when a certain pressure is applied. Such inorganic particle exhibits a high dielectric characteristic, in which a dielectric constant is 100 or more. If such inorganic particle is tensioned or compressed upon the application of a certain pressure, electric charges are generated to respectively charge one side positively and the other side negatively. Thus, such particle is a material which has a function of causing a potential difference between both sides.

Examples of the inorganic particle having piezoelectricity include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) hafnia (H_{f}O₂), a mixture thereof or the like, but are not limited thereto.

The inorganic particle having the lithium ion transfer capacity refers to an inorganic particle which has a function of containing a lithium element, but not storing lithium to move a lithium ion. The inorganic particle having the lithium ion transfer capacity may transfer and move a lithium ion due to a kind of defects present inside a structure of particle. Thus, such particle may prevent a decrease in lithium mobility, thereby preventing a decrease in a battery capacity.

Examples of the inorganic particle having the lithium ion transfer capacity include: (LiAlTiP)ₓO_{y}-based glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), 14Li₂O-9Al₂O₃-38TiO₂-39P₂O₅, etc.; lithium germanium thiophosphate (LiₓGe_{y}P_{z}S_{w}, 0<x<4, 0<y<1, 0<z<1, 0<w<5) such as lithium lanthanum titanate (LiₓLa_{y}TiO₃, 0<x<2, 0<y<3), Li_{3.25}Ge_{0.25}P_{0.75}S₄, etc.; lithium nitride (LiₓN_{y}, 0<x<4, 0<y<2) such as Li₃N, etc.; SiS₂-based glass (LiₓSi_{y}S_{z}, 0<x<3, 0<y<2, 0<z<4) such as Li₃PO₄-Li₂S-SiS₂, etc.; P₂S₅-based glass (LiₓP_{y}S_{z}, 0<x<3, 0<y<3, 0<z<7) such as LiI-Li₂S-P₂S₅, etc.; a mixture thereof; or the like, but are not limited thereto.

Further, examples of the inorganic particle having a dielectric constant of 1 or more include SrTiO₃, SnO₂, CeO₂, MgO, NiO, CaO, ZnO, ZrO₂, Y₂O₃, Al₂O₃, TiO₂, SiC, a mixture thereof or the like, but are not limited thereto.

The thermal conductive inorganic particle is a material which provides low thermal resistance but no electrical conductivity and thus have insulation properties, and may be, for example, at least one selected from the group consisting of aluminum nitride (AlN), boron nitride (BN), alumina (Al₂O₃), silicon carbide (SiC), and beryllium oxide (BeO), but are not limited thereto.

In case of using the above-described high dielectric inorganic particle, the inorganic particle having piezoelectricity, the thermal conductive inorganic particle and the inorganic particle having the lithium ion transfer capacity together, a synergy effect thereof may be doubled.

A size of the inorganic particle is not limited, but it is preferable that the size thereof is in a range of 0.001 to 10 µm, if possible, in order to form an appropriate porosity between the inorganic particles. If such size is less than 0.001 µm, dispersibility is deteriorated and thus it becomes difficult to control a physical property. If such size is more than 10 µm, a thickness is increased to degrade the mechanical property and also the coating layer does not fulfill a role thereof due to an excessively large pore size, but increases a chance of causing an internal short circuit while charging and discharging a battery.

A content of the inorganic particle is not particularly limited, but it is preferable that such content is in a range of 1 to 99 wt.%, more preferably in a range of 10 to 95 wt.% based on 100 wt.% of a mixture of an inorganic particle and a binding material. If the content thereof is less than 1 wt.%, the content of binding material becomes excessively large to decrease a pore size and a porosity due to a decrease in empty space formed between inorganic particles, and thus mobility of lithium ion may be deteriorated. In contrast, if the content thereof is more than 99 wt.%, the content of binding material becomes excessively small to deteriorate a mechanical property of the coating layer due to a weakened adhesive strength between inorganic materials.

On the other hand, the binding material is not limited, unless it causes a side reaction with the electrolyte. In particular, the binding material may be one of which a glass transition temperature (Tg) is as low as possible, preferably in the range of -200 to 200°C. This is because such binding material may improve the mechanical properties of a final insulating film.

Further, the binding material does not need to have ion conduction capacity, but it is more preferable to use a polymer having ion conduction capacity.

Thus, it is preferable that the binding material has a high dielectric constant. Indeed, a degree of dissociation of salt in an electrolyte depends on the dielectric constant of an electrolytic solvent. As the dielectric constant of the polymer increases, the degree of dissociation of salt in the electrolyte may be improved. The dielectric constant of the polymer used may be 1 or more, particularly in a range of 1.0 to 100 (measurement frequency=1 kHz), and preferably 10 or more.

In addition to the functions described above, the binding material may have a feature of being gelled to show a high degree of swelling with an electrolytic solution, when being impregnated into the liquid electrolytic solution. Indeed, if the binding material is a polymer having an excellent degree of swelling with an electrolytic solution, the electrolytic solution injected after assembling of a battery permeates the polymer, and the polymer retaining the absorbed electrolytic solution comes to have an ion conduction capacity for the electrolyte. Thus, if possible, a solubility index of the polymer is preferably in a range of 15 to 45 MPa^{1/2}, more preferably in a range of 15 to 25 MPa^{1/2} and 30 to 45 MPa^{1/2}. If the solubility index is less than 15 MPa^{1/2} and more than 45 MPa^{1/2}, it becomes difficult to have swelling with the liquid electrolytic solution for a conventional battery.

Examples of the binding material may be one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and polyvinyl alcohol.

The total thickness of the separator 130 may be 5 micrometers to 20 micrometers, particularly 5 micrometers to 15 micrometers, more particularly 6 micrometers to 13 micrometers.

The gel electrolyte includes a lithium salt and a non-aqueous organic solvent, and one or more polymerizable compound selected from the group consisting of a polymerizable monomer, oligomer, or copolymer having a polymerizable unsaturated functional group, and may be one in which at least a part of the polymerizable unsaturated functional group is cured.

In other words, the gel electrolyte may be the one in which a gel electrolyte composition containing a lithium salt, a non-aqueous organic solvent, and one or more polymerizable compounds selected from the group consisting of a polymerizable monomer, oligomer, or copolymer having a polymerizable unsaturated functional group is cured by heat or light.

The lithium salt can be used similarly as that used in lithium secondary batteries. The lithium salt is used as a medium for transferring ions within a lithium secondary battery. For example, the lithium salt may include Li⁺ as a cation, and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻, as an anion.

Specifically, the lithium salt may include one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), or a mixture of two or more of them. However, in terms of excellent stability, it is preferable to include Li(N(SO₂CF₃)₂.

Although the concentration of the lithium salt may be appropriately changed within a generally applicable range, the lithium salt may be included at a concentration of 0.5 M to 3 M, particularly at a concentration of 1 M to 2.5 M, and more particularly at a concentration of 1 M to 2 M in the electrolyte in order to obtain an optimal effect of forming a film for preventing corrosion on the electrode surface. When the concentration of the lithium salt satisfies the above range, the effect of improving the cycle characteristics during high-temperature storage of the battery is sufficient, and the viscosity of the electrolyte is appropriate, thereby capable of improving electrolyte impregnation property.

The non-aqueous organic solvent is not limited as long as it can minimize decomposition due to an oxidation reaction or the like during the subsequent charge/discharge process of the bipolar battery, and can exhibit its properties together with an additive. For example, a carbonate-based organic solvent, an ether-based organic solvent, an ester-based organic solvent, and the like may be used alone or in mixture of two or more thereof, and specifically, a carbonate-based organic solvent may be used.

Among the organic solvents, the carbonate-based organic solvent may include at least one selected from the group consisting of a cyclic carbonate-based organic solvent and a linear carbonate-based organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and, more specifically, it may include dimethyl carbonate.

The ether-based organic solvent may include at least one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, a low dielectric constant linear carbonate-based compound such as dimethyl carbonate and diethyl carbonate and a linear ester-based compound, in an appropriate ratio, an electrolyte having high electrical conductivity may be prepared, which may be more preferably used.

Moreover, the electrolyte may further comprise a functional additive. The functional additive may be included to prevent the induction of breaking of the negative electrode in a high power environment, or to further improve low-temperature high-rate discharge characteristics, high-temperature stability, overcharge prevention, swelling improvement effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and particularly 1 wt.% to 5 wt.% based on the total weight of the gel electrolyte. When the amount of the sultone-based compound in the gel electrolyte is more than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the gel electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the gel electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the gel electrolyte.

Further, the halogen-substituted carbonate-based compound may include fluoroethylene carbonate(FEC), and may be included in an amount of 5 wt.% or less based on the total weight of the gel electrolyte. When the amount of the halogen-substituted carbonate-based compound in the gel electrolyte is more than 5 wt.%, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. When the content of the cyclic carbonate-based compound in the gel electrolyte is more than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3 wt.% or less based on the total weight of the gel electrolyte.

The borate-based compound may include lithium oxalyldifluoroborate, and may be included in an amount of 3 wt.% or less based on the total weight of the gel electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate (LiB(C₂O₄)₂) and LiBF₄, and may be included in an amount of 3 wt.% or less based on the total weight of the gel electrolyte.

Two or more kinds of the functional additives may be mixed, and included in an amount of 20 wt.% or less, particularly 0.1 wt.% to 10 wt.%, based on the total weight of the gel electrolyte. When the content of the functional additive is more than 20 wt.%, there is a possibility that excessive side reactions in the electrolyte may occur during charge and discharge of the battery. In particular, it is not sufficiently decomposed at high temperatures, and may exist as an unreacted material or in a precipitated state in an electrolyte at room temperature. Thereby, side reactions may occur in which the lifetime or resistance characteristics of the battery are reduced.

The polymerizable compound of the polymerizable monomer, oligomer or copolymer is a material having a polymerizable unsaturated functional group, for example, a compound which has a polymerizable unsaturated functional group selected from the group consisting of vinyl, epoxy, allyl and (meth)acryl groups, and can be converted into a gel type through polymerization or crosslinking. The polymerizable compound is not particularly limited, as long as it is used conventionally as a monomer, oligomer or polymer for preparing a gel electrolyte.

More specifically, non-limiting examples of the polymerizable monomer or oligomer include tetraethylene glycoldiacrylate, polyethylene glycol diacrylate (molecular weight 50~20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxy octane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in mixture of two or more thereof.

In addition, as a representative example, the copolymer include at least one copolymer selected from the group consisting of allyl 1,1,2,2-tetrafluoroethyl ether (TFE)-(2,2,2-trifluoroethyl acrylate) polymer, TFE-vinyl acetate, TFE-(2-vinyl-1,3-dioxolane) polymer, TFE-vinyl methacrylate polymer, TFE-acrylonitrile polymer, TFE-vinyl acrylate polymer, TFE-methyl acrylate polymer, TFE-methyl methacrylate(MMA) polymer and TFE-2,2,2-trifluoroethyl acrylate(FA) polymer.

The polymer formed through the curing of the above materials may be included in an amount of 0.01 wt.% to 10 wt.% based on the total weight of the gel electrolyte. When the content of the polymer is more than 10 wt.%, the amount of the polymerizable material increases during the preparation of the gel electrolyte, so that gelation occurs too quickly or is formed too densely, resulting in a disadvantage in that a gel with high resistance is obtained. On the contrary, when the content is less than 0.01 wt.%, the effect due to gelation cannot be obtained, which is not preferable.

Meanwhile, the gel electrolyte of the present disclosure may further include a polymerization initiator for polymerization of the polymerizable unsaturated functional group, and a conventional thermal polymerization initiator or photopolymerization initiator known in the art may be used. For example, the initiator may be decomposed by heat to form radicals, and react with the polymerizable monomer, oligomer, or polymer through free radical polymerization to form a gel electrolyte.

More particularly, examples of the polymerization initiator include organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azobis(2-cyanobutane), 2,2'-azobis(methylbutyronitrile), 2,2'-azobis(iso-butyronitrile) (AIBN) and 2,2'-azobisdimethyl valeronitrile (AMVN), or the like, but are not limited thereto.

The polymerization initiator is decomposed by heat including by way of non-limiting example, heat of 30°C to 100°C, or decomposed at room temperature (5°C to 30°C) to form radicals in a bipolar unit cell, and the polymerizable unsaturated functional group of a polymerizable monomer, oligomer, or polymer can react by free radical polymerization to form a gel electrolyte.

The polymerization initiator may be included in an amount of 0.01 to 20 parts by weight, particularly 0.01 to 1 parts by weight, based on 100 parts by weight of the polymerizable compound.

When the polymerization initiator is included within a range of 0.01 to 20 parts by weight, it is possible to increase the gel conversion rate so that gel electrolyte properties may be ensured, and to prevent a pre-gelation reaction so that the wettability of an electrode with an electrolyte may be improved.

Meanwhile, FIG. 2 shows a cross-sectional schematic diagram of a bipolar unit cell 100' according to another embodiment of the present disclosure, and FIG. 3 shows a schematic diagram of the upper surface of the negative electrode 120' side of the bipolar unit cell 100'.

Referring to FIGS. 2 and 3, the bipolar unit cell 100' consists of a structure which comprises a positive electrode 110' including a positive electrode current collector 111', and a positive electrode material layer 112' formed on one surface of the positive electrode current collector 111' so that a positive electrode non-coated portion 111'a is formed at the edge, a negative electrode 120' including a negative electrode current collector 121', and a negative electrode material layer 122' formed on one surface of the negative electrode current collector 121' so that a negative electrode non-coated portion 121'a is formed at the edge, and a separator 130', wherein the positive electrode material layer 112' and the negative electrode material layer 122' are stacked so as to face each other while interposing a separator 130' between them, in the same manner as described in FIG. 1.

In this case, a cured gel electrolyte (not shown) is contained in at least one selected from the group consisting of the positive electrode material layer 112', the negative electrode material layer 122', and the separator 130'.

Further, the bipolar unit cell 100' has a structure in which a positive electrode insulating layer 113' is formed on the positive electrode non-coated portion 111'a on the side where the positive electrode material layer 112' is formed, and a negative electrode insulating layer 123' is formed on the negative electrode non-coated portion 121'a on the side where the negative electrode material layer 122' is formed.

The specific contents of the bipolar unit cell 100' are as described above.

Meanwhile, in addition to the bipolar unit cell 100 of FIG. 1. the bipolar unit cell 100' may have a structure in which conductive layers 141, 142 are formed on the other side of the positive electrode current collector 111' and the other side of the negative electrode current collector 121'.

Although the figure shows a structure formed on both sides, a conductive layer may be formed on at least one of them.

Here, the conductive layers 141, 142 can be formed for subsequent adhesion between bipolar unit cells.

Meanwhile, the formation area of the conductive layers 141, 142 may be formed particularly with an area of 60% to 100%, more particularly 90% to 100%, of the area of the region exposed on the other surface of the positive electrode current collector 111' and the other surface of the negative electrode current collector 121'.

The thickness t₂ of such conductive layers 141, 142 may be 1 to 100 µm, particularly 1 to 20 µm.

If the conductive layer is formed too thinly outside the above range, there is a difficulty in the process, and if the conductive layer is formed too thickly, the current transmission speed decreases or the overall volume increases, which is not preferable.

Such conductive layers 141, 142 may be a conductive tape or a conductive sealant. That is, the conductive layer may be formed of a tape or may be formed of a sealant layer.

Here, the conductive tape may be a copper tape or a carbon tape containing copper or carbon, which is a material having conductivity.

Forming the conductive layers 141, 142 in the form of a tape in this manner facilitates the process.

Further, the conductive sealant may include a conductive particle and an adhesive material.

In this case, the conductive particles are not limited and may be conductive particles, for example, materials such as carbon, metal, etc. Specifically, the conductive particles may be carbon, such as carbon black, carbon nanotubes, or graphene, or metals such as copper, aluminum, platinum, silver, titanium, or nickel. More specifically, the conductive particles may include copper particles or carbon particles.

Here, the average particle diameter D50 of the conductive particles may be 300 nm to 10 µm, and particularly, 300 nm to 2 µm.

If the average particle diameter is too large outside the above range, it is difficult to easily adjust the thickness of the conductive layers 141, 142, and if the average particle diameter is too small, there is a problem that the electrically conductive pass becomes long.

The adhesive material may include at least one selected from the group consisting of an acrylic resin, a phenolic resin, a xylene resin, a styrene-based resin, and an epoxy compound, and particularly, may be an epoxy compound.

The conductive layers 141, 142 must enable even transmission of current between the positive electrode and the negative electrode as described above, and such transmission affects the bipolar battery performance. Thus, the electronic conductivity of the conductive layers 141, 142 may be 1 S/m to 1 GS/m, particularly 10 S/m to 100 MS/m, and more particularly 100 S/m to 100 MS/m.

Having electronic conductivity in the above range is preferable in terms of battery performance. If the conductivity is lower than the above range, sufficient conductivity cannot be obtained, and it is not easy to manufacture a conductive layer having a conductivity higher than the above range.

The process of forming such conductive layers 141, 142 is also not separately shown in FIG. 6, but the conductive layers 141, 142 can be formed after step (c) in FIG. 6. The conductive layers 141, 142 may be formed by a simple attachment method if it is a tape, and may be formed by a conventionally known method such as a coating or drying step if it is a coating layer. The method thereof is not limited thereto.

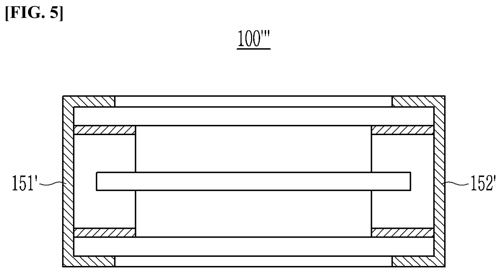

Furthermore, FIGS. 4 and 5 each show cross-sectional schematic diagrams of the bipolar unit cells 100", 100‴ according to yet another embodiment.

Referring to FIGS. 4 and 5, the bipolar unit cells 100", 100‴ may further include sealing members 151, 152, 151', 152' that seal the opening between the positive electrode current collector and the negative electrode current collector, compared to the bipolar unit cell 100' of FIG. 2.

Here, referring to FIG. 4, the sealing members 151, 152, 151', and 152' are formed on the inside of the opening between the positive electrode current collector and the negative electrode current collector, and can separate the gel electrolyte impregnated in at least one of the positive electrode material layer, the negative electrode material layer, and the separator from other bipolar unit cells to thereby prevent leakage. Alternatively, referring to FIG. 5, the gel electrolyte may also be separated by applying a polymer film having a form that connects the other surface of the positive electrode current collector and the other surface of the negative electrode current collector.

In this case, the shape of the sealing member is not limited as long as the gel electrolyte contained in one bipolar unit cell and the gel electrolyte contained in another bipolar unit cell can be separated so that they are not mixed with each other.

Meanwhile, when forming the conductive layer described above, the conductive layer has a constant thickness. Thus, it is more preferable that the sealing member is formed to a thickness corresponding to the conductive layer as shown in FIG. 5, which can offset without a thickness deviation caused by the formation of the conductive layer or the formation of the sealing member, thereby providing a more robust structure.

Although the process of forming such sealing members 151, 152, 151', 152' is not separately shown in FIG. 5, they can be formed after step (c) in FIG. 5, and the method thereof is not limited.

The sealing member may include, for example, one or more materials selected from the group consisting of polypropylene, polypropylene mixed with inorganic filler, polyphthalamide, polyethylene, polyurethane, general-purpose plastic, thermoplastic olefin rubber, polyamide-based synthetic resin, polytetrafluoroethylene, polyvinylidene fluoride, polystyrene, polyethylene naphthalate, and silicone rubber.

Specifically, the sealing member may have a three-layer structure in which thermoplastic resin films are located on both sides, and a thermosetting resin film is located between them. When the sealing member has such a structure, it is most preferable because the adhesive strength is improved by the thermoplastic resin, and the film shape retainability is improved by the thermosetting resin.

### Bipolar battery

According to yet another embodiment of the present disclosure, a bipolar battery comprising two or more of the bipolar unit cells is provided.

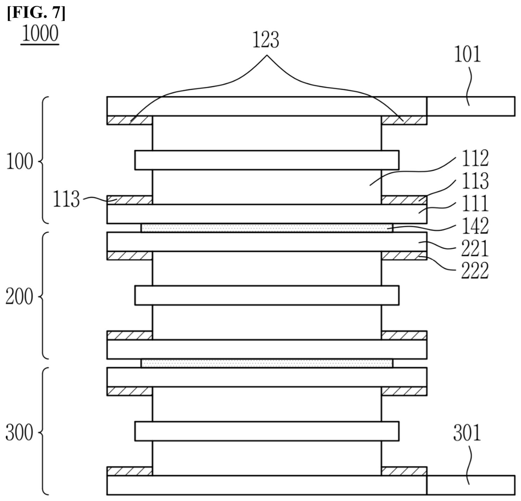

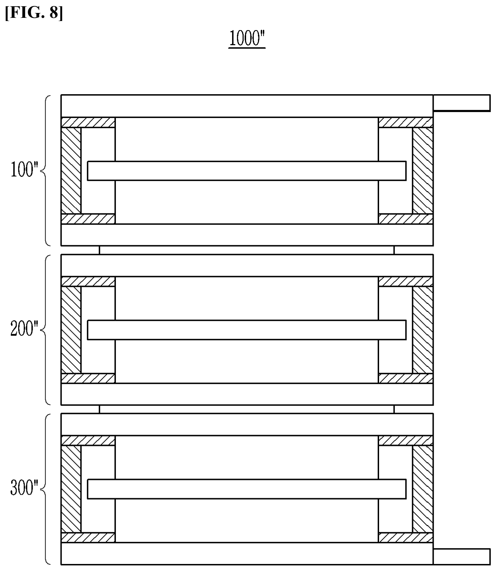

FIGS. 7 and 8 show schematic cross-sectional views of such bipolar batteries 1000, 1000".

First, referring to FIG. 7, the bipolar battery 1000 has a structure in which two or more bipolar unit cells 100, 200, 300 are stacked such that current collectors having different polarities face each other.

Specifically, the positive electrode current collector 111 of the bipolar unit cell 100 and the negative electrode current collector 221 of the bipolar unit cell 200 are stacked so as to face each other, and the bipolar unit cell 200 and the bipolar unit cell 300 are also stacked so that the current collectors having different polarities face each other. Therefore, the flow of current can be obtained by the contact of them, etc.

In addition, as pointed out in the description of the bipolar unit cell 100 of FIG. 1, the bipolar unit cells 100, 200, 300 according to the present disclosure may have insulating layers (typically, 113, 123) formed on one surface of the non-coated portions of the current collector.

Specifically, an insulating layer 113 is formed on one surface on which the positive electrode material layer and the negative electrode material layer are formed at the respective edges of the positive electrode current collector 111 and the negative electrode current collector 221.

Meanwhile, the conductive layers 142 may be formed between respective bipolar unit cells 100, 200, 300.

The bipolar battery 1000 manufactured in this manner may have a structure in which one of the bipolar unit cells located at the outermost part among the stacked bipolar unit cells has a positive electrode tab 301 formed on the positive electrode current collector so that the positive electrode lead is connected and thus electrical leading to the outside becomes possible, and the other may have a negative electrode tab 101 formed on the negative electrode current collector so that the negative electrode lead is connected and thus electrical leading to the outside becomes possible, thereby performing the charge and discharge by electrical connection.

Furthermore, referring to FIG. 8, the bipolar battery 1000" of FIG. 8 is the same as that of FIG. 7 except that it has a structure in which sealing members are formed in the respective bipolar unit cells 100", 200", 300" as shown in FIG. 4, compared to the bipolar battery 1000 of FIG. 7.

Embodiments of the present disclosure will be described with reference to the following examples to demonstrate that the invention exhibits the intended improved effects.

### <Example 1>

LiNi_{0.8}Co_{0.05}Mn_{0.1}Al_{0.05}O₂ as a positive electrode active material, carbon nanotubes as a conductive material, and PVDF as a binder were added into an NMP solvent in a weight ratio of 98:1:1 and dispersed to prepare a positive electrode slurry, which was then coated to a thickness of 60 micrometers on one surface of the Al metal thin film with leaving the edge portion, followed by drying and rolling to prepare a positive electrode.

A mixture of graphite and SiO (weight ratio 95:5) as a negative electrode active material, carbon black as a conductive material, styrene-butadiene rubber(SBR) as a binder, and carboxymethyl cellulose(CMC) as a filler were added into a water solvent in a weight ratio of 96:1:2:1 and dispersed to prepare a negative electrode slurry, which was then coated to a thickness of 70 micrometers on one surface of the Cu metal thin film with leaving the edge portion, followed by drying and rolling to prepare a negative electrode.

A CCS separator (thickness: 13 micrometers) having an organic/inorganic mixed layer (Al₂O₃: PVdF = 95:5) formed on both surfaces of a polyolefin substrate was used as a separator.

Further, LiPF₆ was dissolved in a non-aqueous organic solvent having a composition of ethylene carbonate (EC) : ethyl methyl carbonate (EMC) = 30 : 70 (volume ratio), to a concentration of 1.0 M. Trimethylolpropane triacrylate as a polymerizable compound was added in an amount of 10 wt.% based on the total weight, and azobisisobutyronitrile (AIBN, V59) as a polymerization initiator was added in an amount of 0.4 wt.% based on 100 wt.% of the polymerizable compound, thereby preparing a gel electrolyte composition.

A masking tape was attached to the respective edge portions of the positive electrode and the negative electrode, and then the gel electrolyte composition was impregnated into the positive electrode and the negative electrode. At this time, the vacuum was applied and released five times, and then the excess residual gel electrolyte composition remaining on the surface was removed. Similarly, the gel electrolyte composition was impregnated even into the separator. The separator impregnated with the gel electrolyte composition was interposed between the positive electrode impregnated with the gel electrolyte composition and the negative electrode impregnated with the gel electrolyte composition, which was stacked, and then heat-cured (65 degrees Celsius, 600 minutes) in a compressed state to manufacture a unit cell. Two unit cells manufactured in this way were prepared, and then a conductive adhesive (carbon sealant) was applied (2 µm) to the other surface of the Cu metal film of the negative electrode of one unit cell, and then the other surface of the Al metal thin film of the positive electrode of the other unit cell was stacked so as to face each other, thereby manufacturing a semi-solid bipolar cell.

### <Example 2>

A semi-solid bipolar cell was manufactured in the same manner as in Example 1, and a non-porous membrane, i.e., a PE film (polyethylene, thickness 20 µm) with a porosity of 20%, was attached to the edge portion of the Al metal film and the Cu metal film of the semi-solid bipolar cell to seal them.

### <Experimental Example 1>

In order to confirm whether the semi-solid bipolar cells manufactured in Examples 1 and 2 operate normally, they were charged at 0.02C (1.22mA), 7.2V cut-off, subjected to formation and degassing, and then CC-CV charge and discharge were performed at 0.1C (6.1mA) and 5V-8.4V.

The results are shown in the graphs in FIGS. 6 to 7 below.

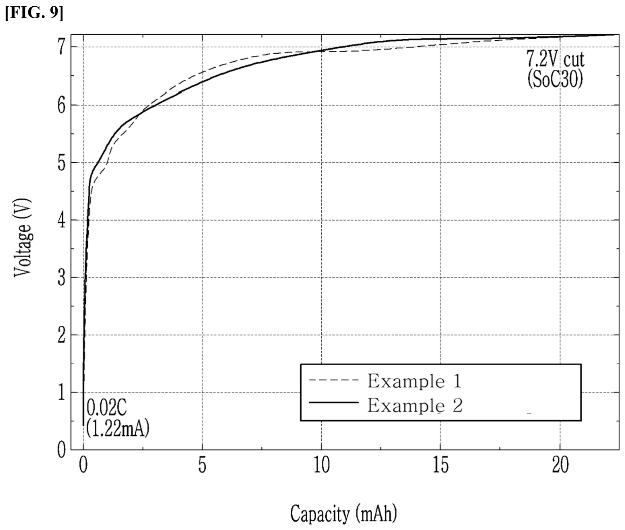

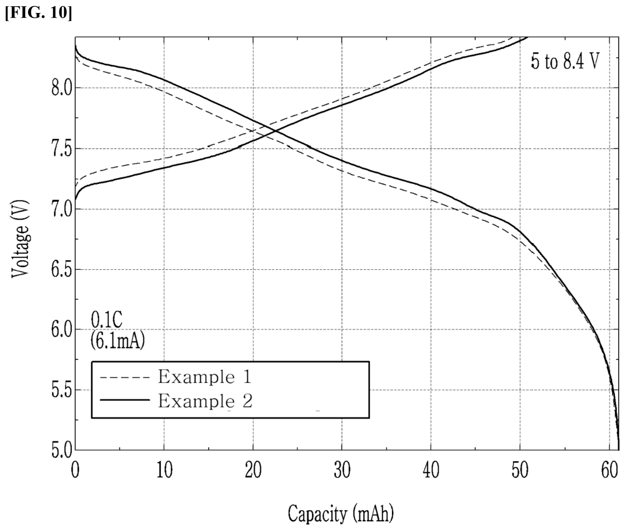

Referring to FIGS. 9 and 10, it was confirmed that they are expressed at a normal capacity in the formation, and both cases similarly exhibit the initial capacity of about 61.09mAh and the initial efficiency of about 83.5% in one charge and discharge.

### <Comparative Example 1>

A separator (thickness: 13 micrometers) coated with a mixed composition of Al₂O₃:PVDF (weight ratio: 95:5) on a substrate of polyolefin material was interposed between the two positive electrodes and double-sided negative electrodes prepared in Example 1 to prepare an electrode assembly, which was housed in a pouch battery case, the gel electrolyte composition of Example 1 was injected thereto and impregnated by repeating application and release of the vacuum five times, and then thermally cured (65 degrees Celsius, 600 minutes) to manufacture a semi-solid secondary battery.

The semi-solid secondary battery was charged at 0.02C (1.22 mA), 4.2 V cut-off, and subjected to formation and degassing.

### <Experimental Example 2>

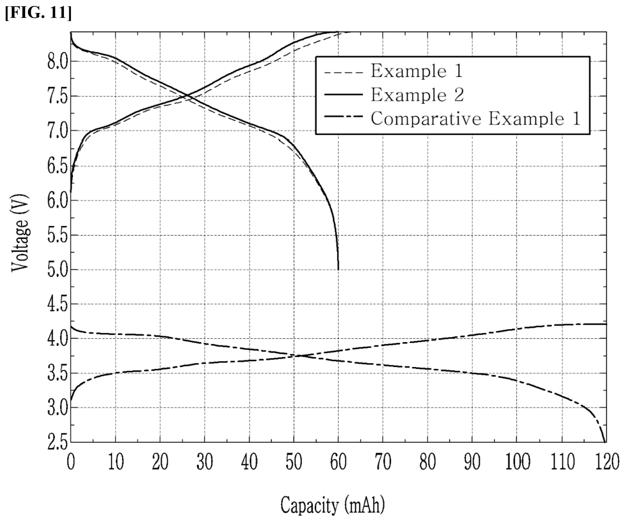

The semi-solid bipolar cells of Examples 1 and 2 and the semi-solid secondary battery of Comparative Example 1, which have subjected to formation and degassing, were subjected to CC-CV charge and discharge at 0.1C, and the graph thereof is depicted in FIG. 11 below. The results obtained therefrom are shown in Table 1 below.

**[Table 1]**

| | Example 1/Example 2 | Comparative Example 1 |
|---|---|---|
| Capacity (mAh) | 61 | 120 |
| Drive voltage range (V) | 5-8.4V | 2.5-4.2V |

Referring to Table 1 above and FIG. 11 below, it can be confirmed that when a bipolar cell was manufactured in the same manner as in Examples 1 and 2 of the present disclosure, it operates well in the form of a high-voltage cell with a lower capacity while maintaining similar coulombic efficiency and voltage profile behavior compared to the manufacturing method of a conventional lithium secondary battery.

Based on the above disclosure, it will be understood by those of ordinary skill in the art that various applications and modifications can be made within the scope and spirit of the present disclosure.

### [INDUSTRIAL APPLICABILITY]

The bipolar unit cell and bipolar battery according to the present disclosure have a structure in which the positive electrode active material is formed and bonded to the positive electrode current collector, and the negative electrode active material is formed and bonded to the negative electrode current collector, and thus satisfy the required conditions, compared to the conventional ones formed on both surfaces of a single current collector.

In addition, at least one of the positive electrode and negative electrode, or a separator interposed between them, is pre-impregnated with a gel electrolyte, and then stacked and cured to thereby bind the components of the bipolar unit cell, which exhibits the effect of being able to operate as a bipolar battery without a separate lamination process and a sealing member.

Of course, the sealing force can be further increased by including a sealing member, thereby effectively preventing the problem of electrolyte leakage.

Moreover, when an insulating layer is formed on the non-coated portion of the positive electrode and the negative electrode, a short circuit between the positive electrode and negative electrode can be prevented.

Furthermore, when a conductive layer is formed between two or more unit cells to bond them, the bipolar unit cells can be firmly bonded, thereby increasing the safety of the bipolar battery.

## Claims

1. A bipolar unit cell comprising:
a positive electrode including a positive electrode current collector, and a positive electrode material layer formed on one surface of the positive electrode current collector so that a positive electrode non-coated portion is formed at the edge,
a negative electrode including a negative electrode current collector, and a negative electrode material layer formed on one surface of the negative electrode current collector so that a negative electrode non-coated portion is formed at the edge, and
a separator,
wherein the positive electrode material layer and the negative electrode material layer are stacked so as to face each other while interposing the separator between them, and
wherein a cured gel electrolyte is contained in at least one selected from the group consisting of the positive electrode material layer, the negative electrode material layer, and the separator.

2. The bipolar unit cell according to claim 1,
wherein the positive electrode, the negative electrode, and the separator are adhered to one another by the cured gel electrolyte.

3. The bipolar unit cell according to claim 1,
wherein a positive electrode insulating layer is formed on the positive electrode non-coated portion, and a negative electrode insulating layer is formed on the negative electrode non-coated portion.

4. The bipolar unit cell according to claim 1,
wherein a conductive layer is formed on at least one of the other surface of the positive electrode current collector and the other surface of the negative electrode current collector.

5. The bipolar unit cell according to claim 4,
wherein the conductive layer is formed with an area of 90% to 100% relative to the exposed area of the other surface of the positive electrode current collector or the other surface of the negative electrode current collector.

6. The bipolar unit cell according to claim 4,
wherein the conductive layer is a conductive tape containing copper or carbon or a conductive sealant.

7. The bipolar unit cell according to claim 1,
further comprising a sealing member that seals an opening between the positive electrode current collector and the negative electrode current collector.

8. The bipolar unit cell according to claim 7,
wherein the sealing member is a polymer film formed on the inside of the opening between the positive electrode current collector and the negative electrode current collector, or having a form that connects the other surface of the positive electrode current collector and the other surface of the negative electrode current collector.

9. The bipolar unit cell according to claim 1,
wherein the positive electrode material layer is a dry positive electrode.

10. The bipolar unit cell according to claim 1,
wherein the positive electrode current collector is an Al current collector, and the negative electrode current collector is a Cu current collector.

11. A manufacturing method of a bipolar unit cell as set forth in claim 1, the method comprising the steps of:
(a) forming a positive electrode material layer on one surface of a positive electrode current collector so that a positive electrode non-coated portion is formed at the edge, and forming a negative electrode material layer on one surface of a negative electrode current collector so that a negative electrode non-coated portion is formed at the edge, thereby preparing a positive electrode and a negative electrode, and preparing a separator,
(b) impregnating a gel electrolyte composition into at least one selected from the group consisting of the positive electrode material layer, the negative electrode material layer, and the separator, and
(c) stacking the positive electrode and the negative electrode with the separator interposed between them in a state in which the positive electrode material layer and the negative electrode material layer face each other, and then curing the gel electrolyte composition.

12. The manufacturing method of a bipolar unit cell according to claim 11,
wherein the positive electrode, the negative electrode, and the separator are adhered to one another and integrated by the curing of the gel electrolyte composition.

13. The manufacturing method of a bipolar unit cell according to claim 11,
wherein in step (b), when impregnating the gel electrolyte composition into the positive electrode material layer or the negative electrode material layer, the impregnation is performed in a state where a masking tape is attached to at least one of the positive electrode non-coated portion and the negative electrode non-coated portion.

14. The manufacturing method of a bipolar unit cell according to claim 11,
wherein the manufacturing method further comprises forming a positive electrode insulating layer on the positive electrode non-coated portion, and forming a negative electrode insulating layer on the negative electrode non-coated portion.

15. The manufacturing method of a bipolar unit cell according to claim 11,
wherein the manufacturing method further comprises forming a conductive layer on at least one of the other surface of the positive electrode current collector and the other surface of the negative electrode current collector.

16. The manufacturing method of a bipolar unit cell according to claim 11,
after step (c), further comprising sealing the opening between the positive electrode current collector and the negative electrode current collector with a sealing member.

17. The manufacturing method of a bipolar unit cell according to claim 11,
wherein the positive electrode material layer is formed by dry-mixing a positive electrode active material, a conductive material, and a binder containing a fiberized polymer, forming the mixture into a free-standing film, and then attaching the film to one surface of the positive electrode current collector.

18. A bipolar battery having a structure in which two or more of the bipolar unit cells according to any one of claims 1 to 10 are stacked,
wherein the bipolar unit cells are stacked so that current collectors having different polarities face each other.

19. The bipolar battery according to claim 18,
wherein a conductive layer is located between the two or more bipolar unit cells, and the bipolar unit cells are adhered to each other by the conductive layer.

20. The bipolar battery according to claim 18,
wherein in the bipolar unit cells located at the outermost part among the bipolar unit cells, the outermost electrodes are formed with electrode terminals, respectively.
